# EUROPEAN PATENT SPECIFICATION

(11) **EP 3 000 580 B1**
(45) Date of publication and mention of the grant of the patent: **13.09.2017**
(21) Application number: 15162929.2
(22) Date of filing: 09.04.2015
(51) Int. Cl.: B29C 45/17

(54) **A METHOD FOR MANUFACTURING A PUSH HANDLE FOR SUPERMARKET TROLLEYS AND A PUSH HANDLE FOR SUPERMARKET TROLLEYS**
VERFAHREN ZUR HERSTELLUNG EINES SCHIEBEGRIFFS FÜR EINKAUFSWAGEN UND EIN SCHIEBEGRIFF FÜR EINKAUFSWAGEN
PROCÉDÉ DE FABRICATION D'UNE POIGNÉE DE POUSSÉE POUR CHARIOTS DE SUPERMARCHÉ ET UNE POIGNÉE DE POUSSÉE POUR CHARIOTS DE SUPERMARCHÉ

(30) Priority: 24.09.2014 IT TO20140755
(43) Date of publication of application: 30.03.2016
(73) Proprietor: Plastimark S.p.A., 12023 Caraglio (Cuneo) (IT)
(72) Inventor: Giordano, Oscar, I-12023 Caraglio (Cuneo) (IT)
(74) Representative: Buzzi, Franco

(56) References cited:
- EP-A1- 2 505 332
- WO-A1-94/20279
- JP-A- H09 193 187
- US-A- 6 117 018
- US-A1- 2003 001 411

## Description

The present invention relates in general to supermarket trolleys, comprising a basket for the goods carried by a structure on wheels, and a push handle for maneuvering the trolley by the user.

Particularly, the invention relates to a push handle, of the type comprising a central portion, for example, with a shelf-shaped configuration for supporting electronic or other types of apparatus, and two essentially L-shaped side portions designed to attach to the supporting structure of the trolley.

Typically, push handles of this type are formed of several pieces, all or in part of plastic material formed in separate specific molds, then connected together mechanically.

The object of the present invention is to make such a push handle available that is manufacturable in a simpler and more economic manner, with relatively simple molding equipment, which is also more robust but at the same time lighter thanks to the use of a lesser amount of plastic material.

A first aspect of the invention lies in the fact that the push handle is characterized in that it is formed of a single piece of plastic material made by partly gas-assisted injection molding, with said two side portions having a hollow conformation.

According to another aspect, the invention relates to a method for manufacturing the push handle, characterized in that it consists of a single operation of injection molding of plastic material within a single mold, including a first step wherein the plastic material is injected into a main cavity of the mold to form said central portion, and a second step wherein part of the plastic material injected in the first step is transferred by sliding, by supplying a dual flow of a pressurized gas, into two secondary cavities of the mold, placed in communication with said main cavity in said second step, so as to form said side portions with a hollow conformation.

The invention will now be described in detail with reference to the attached drawings, in which:

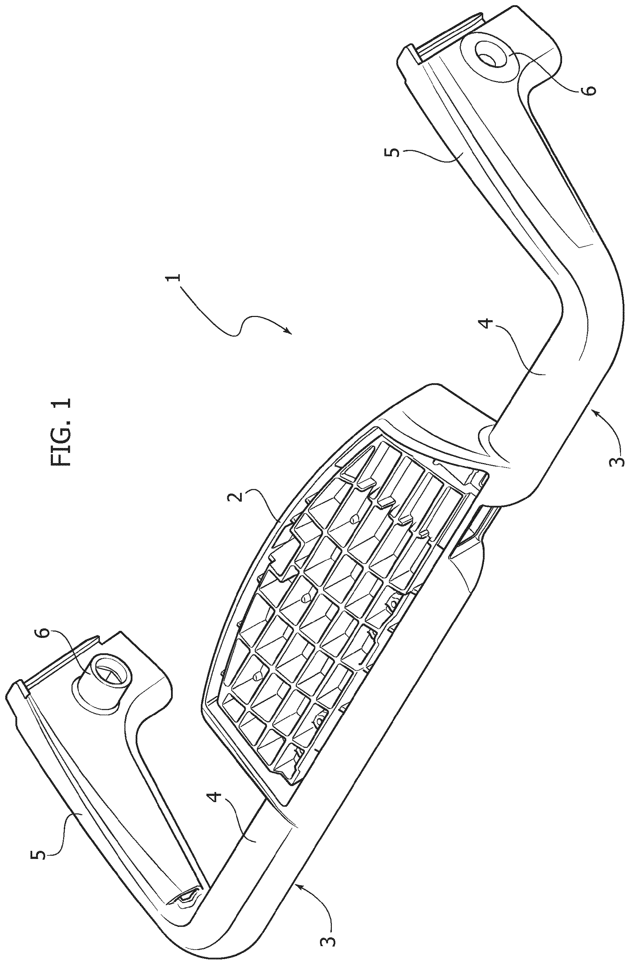

- Figure 1 is a schematic perspective view of an embodiment of a push handle for supermarket trolleys according to the invention,
- Figure 2 is a partial perspective longitudinally-sectioned view of the push handle of Figure 1, and
- Figure 3 is a partial perspective cross-sectional view of the push handle of Figure 1.

Referring to the drawings, numeral 1 indicates, in its entirety, a push handle for supermarkets trolleys, formed by a single piece of plastic material molded in a single mold with the modalities specified below.

The push handle 1 has a shelf-shaped central portion 2 provided with stiffening ribs and intended, during use, to support, for example, an electronic apparatus or the like, and two side portions 3 integral with the central shelf 2.

Each side portion 3 is generally L-shaped, including a first portion 4 joined and parallel to the central shelf 2, and a second portion 5, orthogonal to the first portion 4, and bearing a stud 6 at its free end, by means of which the push handle 1 is indirectly fixed to the supporting structure of the trolley.

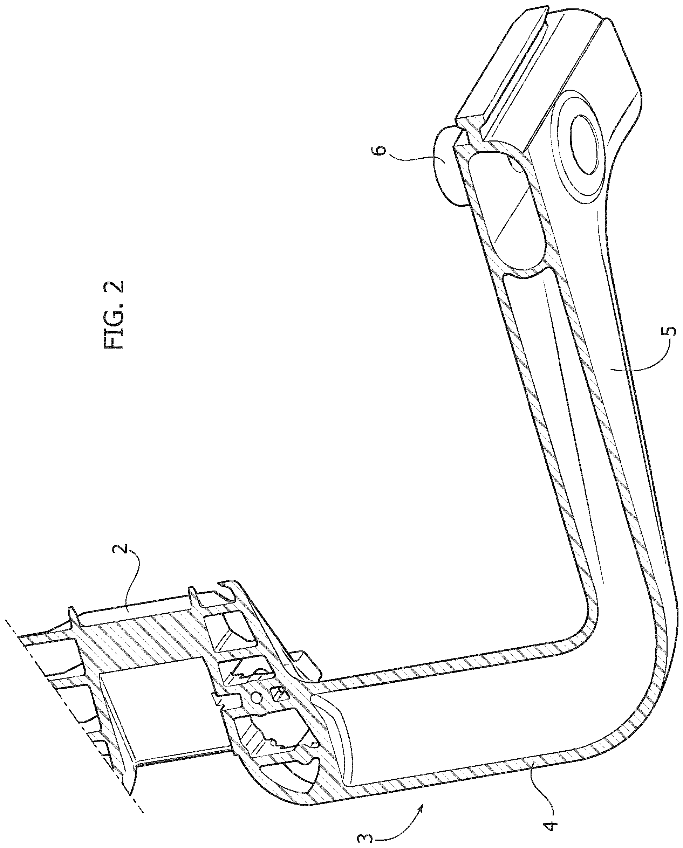

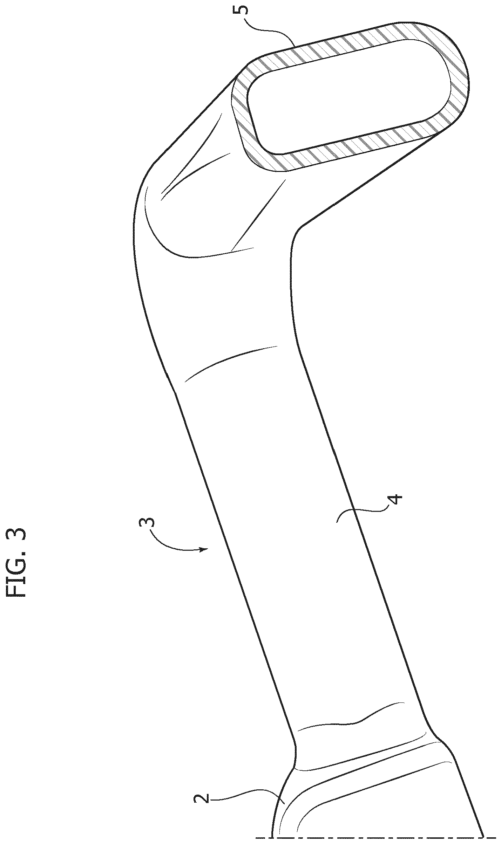

As is best seen in Figures 2 and 3, each of the two side portions 3 has a hollow shape, or rather tubular.

According to the invention, the push handle 1 is produced by means of a process of partly gas-assisted injection molding, in the manner described below.

The mold, not shown in the drawings since it is generally within the scope of those skilled in the art, includes a main cavity for forming the central shelf 2 and two secondary cavities for forming the side portions 3, initially isolated from the main cavity, and to each of which one or more nozzles are associated for the supply of a gas, usually nitrogen, under high pressure.

In a first step of the method, the plastic material is injected into the main cavity of the mold to form the central shelf 2 with its relative ribs. Then, following the opening of the communication between the main cavity and the two secondary cavities of the mold, the pressurized gas is supplied which, by means of suitable calibration, pushes the injected plastic material into the secondary cavities by sliding, so as to form the tubular walls of the portions 4 and 5 of each side portion 3. The calibration of this step regards the magnitude of the gas pressure, the timing of opening of the communication between the main cavity and the two secondary cavities of the mold, and possibly the temperature values of these cavities, which can be differentiated in order to adjust the crystallization of the plastic material by directing the gas towards the hottest masses designed to be driven and emptied.

It is apparent from the above that the manufacturing method according to the invention allows the production of the push handle 1 in a single piece, thus eliminating any subsequent assembly operations between different parts, with appreciable reductions in costs, also in relation to a lower amount of plastic material required, together with a lower weight and a strength that is even superior to that of traditional push handles.

Of course, the embodiments of the push handle may be varied widely with respect to those described and illustrated, without thereby departing from the scope of the invention as defined by the following claims.

## Claims

1. A method for manufacturing a push handle (1) for supermarket trolleys having a central portion (2) and two essentially L-shaped side portions (3), **characterized in that** it consists of a single operation of injection molding of plastic material into a single mold, including a first step wherein the plastic material is injected into a main mold cavity to form said central portion (2), and a second step wherein part of the plastic material injected in the first step is transferred by sliding, by supplying a dual flow of a pressurized gas, into two secondary mold cavities, placed in communication with said main cavity in said second step, so as to form said side portions (3) with a hollow conformation.

2. A push handle (1) for supermarket trolleys having a central shelf portion (2) and two essentially L-shaped side portions (3), **characterized in that** it is formed of a single piece of plastic material made by partly gas-assisted injection molding, with said two side portions (3) having a hollow conformation.

## Patentansprüche

1. Verfahren zur Herstellung eines Schiebegriffs (1) für Einkaufswagen, der einen mittigen Abschnitt (2) und zwei im Wesentlichen L-förmige Seitenabschnitte (3) aufweist, **dadurch gekennzeichnet, dass** es aus einem einzigen Arbeitsgang eines Spritzgießens von Kunststoff in eine einzige Form besteht, beinhaltend einen ersten Schritt, in dem der Kunststoff in einen Hauptformhohlraum eingespritzt wird, um den mittigen Abschnitt (2) auszubilden, und einen zweiten Schritt, in dem ein Teil des in dem ersten Schritt eingespritzten Kunststoffs durch Verschieben, durch Zuführen eines zweigeteilten Stroms eines Druckgases, in zwei sekundäre Formhohlräume verbracht wird, die in dem zweiten Schritt in Verbindung mit dem Haupthohlraum angeordnet sind, um die Seitenabschnitte (3) mit einer Hohlform auszubilden.

2. Schiebegriff (1) für Einkaufswagen, der einen mittigen Regalabschnitt (2) und zwei im Wesentlichen L-förmige Seitenabschnitte (3) aufweist, **dadurch gekennzeichnet, dass** er aus einem einzigen Stück Kunststoff ausgebildet ist, das durch teilweise gasunterstütztes Spitzgießen gefertigt ist, wobei die zwei Seitenabschnitte (3) eine Hohlform aufweisen.

## Revendications

1. Procédé pour fabriquer une poignée de poussée (1) pour chariots de supermarché ayant une partie centrale (2) et deux parties latérales (3) essentiellement en forme de L, **caractérisé en ce qu'**il comprend une seule opération de moulage par injection de matière plastique dans un seul moule, comprenant une première étape dans laquelle la matière plastique est injectée dans une cavité de moule principale pour former ladite partie centrale (2), et une seconde étape dans laquelle la partie de matière plastique injectée au cours la première étape, est transférée par glissement, en fournissant un double écoulement de gaz sous pression, dans deux cavités de moule secondaires, placées en communication avec ladite cavité principale lors de ladite seconde étape, afin de former lesdites parties latérales (3) avec une conformation creuse.

2. Poignée de poussée (1) pour chariots de supermarché ayant une partie d'étagère centrale (2) et deux parties latérales (3) essentiellement en forme de L, **caractérisée en ce qu'**elle est formée avec une seule pièce de matière plastique réalisée par moulage par injection partiellement assisté au gaz, avec lesdites deux parties latérales (3) qui ont une conformation creuse.
